# EUROPEAN PATENT SPECIFICATION

(11) **EP 3 088 243 B1**
(45) Date of publication and mention of the grant of the patent: **21.07.2021**
(21) Application number: 15165363.1
(22) Date of filing: 28.04.2015
(51) Int. Cl.: B60N 2/75, B60R 7/04

(54) **ARM REST FOR A VEHICLE SEAT**
ARMLEHNE FÜR EINEN FAHRZEUGSITZ
ACCOUDOIR POUR UN SIÈGE DE VÉHICULE

(43) Date of publication of application: 02.11.2016
(73) Proprietor: Volvo Car Corporation, 40531 Göteborg (SE)
(72) Inventor: Göthlin, Jonas, 42343 Torslanda (SE)
(74) Representative: Valea AB

(56) References cited:
- GB-A- 2 413 270
- US-A- 5 067 625
- US-A1- 2009 072 565
- None

## Description

### TECHNICAL FIELD

The present invention relates to an arm rest having an arm rest compartment with an opening for storing items. The arm rest comprises a lid which permits or prevents access to the arm rest compartment. The lid can be opened to a first and a second opened position by pivoting about a first and a second pivot axis respectively so that access can be gained from two different directions or positions.

### BACKGROUND OF THE INVENTION

Arm rests for vehicle seats which are situated between two vehicle seats are generally referred to as tunnel arm rests. For a driver, or a passenger, sitting in the vehicle seat the tunnel arm rest is providing a comfortable rest surface for the user's arm. An arm rest also generally has a compartment which can be accessed by opening a lid of the arm rest. Such arm rest compartments can be used to store items such as sun glasses, wallets, keys, papers. Some arm rests compartments are even known to have coolers for storing cooled beverage.

To access the arm rest compartment, the user generally pivots the lid from a closed position to an opened position. This has mainly been done by lifting the forward end of the lid, i.e. that end of the lid which is pointing in same direction as the users hand when a user is resting the arm on the arm rest in an intended manner. A hinge is pivotally connecting the rearward end of the lid with the arm rest compartment so that the lid is pivotally opened upon lifting the forward end of the lid.

Such solutions are not easy to access for the driver of the passenger sitting next to the driver and who shares the arm rest with the driver. When a driver needs to access the arm rest compartment, the driver needs to move the forward end of the lid and thus his own arm, to a position which can be difficult to reach when positioned normally in the vehicle seat. The opening of the lid becomes even more critical when driving the vehicle in a traffic environment.

A solution which is directed at providing an alternative opening mechanism for the lid of the arm rest is disclosed in the published Japanese patent no. JP 4293452 B2. The solution comprises an armrest compartment with a pivotable lid. The lid is attached with a hinge arm which is rigidly attached to the lid and pivotally attached to the arm rest compartment. A guide pin and a track assist in guiding the lid along a predetermined path. The guiding means raises the forward edge of the lid with respect to the compartment and the edges thereof.

The Japanese patent publication no. JPH0638859, disclose a glove box having a lid which can be opened from two directions. The lid is pivotally connected to the glove box via a hinge arm having an aperture. The arrangement does however not provide for much more than just a glove box. US2009/0072565 A1 shows an arm rest with a lid wherein a hinge arm is arranged between the lid and console base.

### SUMMARY

It is an object of the present invention to provide for a solution, or to at least reduce some of the drawbacks, or to at least provide for a useful alternative. The objective is at least partly met by an arm rest for a vehicle seat. The arm rest comprises a pivotable lid and an arm rest compartment having an opening. The opening has a first and a second end. The lid has a first end and a second end. The lid is attached to the arm rest compartment via a hinge arm. The hinge arm extends from the first end of the opening to the second end of the lid. The lid is displaceable to a first opened position by pivoting about a first pivot axis and to a second opened position by pivoting about a second pivot axis. The lid has an arm rest side and an opposite under side. When the lid is in the first opened position, the underside of the lid is facing upwards providing a temporary unloading surface.

The arm rest is versatile and can be used as an arm rest and as a temporary table. It also provided access to the arm rest compartment by being opened from two ends, hence also passengers sitting e.g. behind the vehicle seat associated with the arm rest can easily access the arm rest compartment. The arm rest is of a simple mechanical construction in terms of that relatively few parts are used.

According to the invention the arm rest compartment is be provided with a lid support surface in the proximity of the opening, so that when the lid is in the first opened position, the arm rest side is resting on the lid support surface of the arm rest compartment. The lid support surface provides stability to the lid, and thus the unloading surface of the lid.

The hinge arm may be arranged to permit access for a user to the arm rest compartment even if the hinge arm is superimposed the opening of the arm rest compartment. The hinge arm may for example comprise an aperture. The may be superimposed the opening so as to permit access to the arm rest compartment, when the lid is in the first opened position. The aperture is preferably large enough to permit access to the arm rest compartment, i.e. a user should be able to gain access to the arm rest compartment via the aperture of the hinge arm.

The aperture may be substantially superimposed, or at least in the proximity of, the underside of the lid when the lid is in the second opened position. In this manner, the hinge arm is removed from the opening of the arm rest compartment, this permits easy access to the arm rest compartment.

The hinge arm may have a main elongation along a first plane and the first pivot axis may be offset with respect to the first plane. Having an offset first pivot axis with respect to the main elongation of the hinge arm, and the first plane of the elongation arm, enables the lid to be pivoted to a favourable position. As an example, the unloading surface may be substantially flush with the main elongation of the hinge arm.

The hinge arm may comprise a flange extending from the main elongation of the hinge arm. The first pivot axis may be arranged on the flange. The lid may thus me pivotally connected to the hinge arm via a flange. This displaces the pivot axis so that the lid can be pivoted in an easy and favourable manner.

The flange may have different shapes. One favourable shape is if the flange is substantially L-shaped. With a substantially L-shaped flange, the first pivot axis has an elevated position with respect to the first plane when the lid is in the first opened position. The first pivot axis is preferably arranged at the distal end of the substantially L-shaped flange and a proximal end of the substantially L-shaped flange is arranged to the hinge arm, i.e. to the main elongation of the hinge arm.

The temporary unloading surface may be a temporary table or a temporary arm rest surface. A user sitting the vehicle seat associated with the arm rest may have a need to temporarily unload keys, or a coffee cup or similar. In such a case, it may be advantageous to provide a temporary table. It may be an option of course that the temporary unloading surface is made accessible to the vehicle seat behind the vehicle seat associated with the arm rest. A temporary table should be rigid enough to support everyday items such as coffee cups, sandwiches or snacks for example. It may advantageously have a small drip ledge, protecting the user from spillage if a hot cup of coffee is overturned on the table for example.

The hinge arm may comprise an aperture. The aperture may advantageously be arranged to enable access to the arm rest compartment through the aperture, preferably when the lid is in the first opened position. The aperture may thus be arranged so that it does not reduce at least the width of the opening of the arm rest compartment.

The arm rest may comprise a lid retaining arrangement. The lid retaining arrangement is adapted to retain the lid in a steady position when the lid is in the first opened position and/or when the lid is in the closed position. By having a lid retaining arrangement, the lid, and thus the temporary unloading surface, may be kept in a steady position. If a user accidentally bumps into the lid when the lid is in the first opened position providing a temporary unloading surface, the lid resists displacement and the items positioned on the temporary unloading surface is less likely to fall off.

The lid retaining arrangement is formed by mechanical retaining arrangement and/or magnetic retaining arrangement.

The lid retaining arrangement is at least partly formed by one or more hinge arm retaining members and/or one or more arm rest compartment retaining members. The one or more hinge arm retaining members may be arranged on the arm rest compartment, preferably in the proximity of the opening of the arm rest compartment. The one or more arm rest compartment retaining members may be arranged on the hinge arm, preferably closer to that end of the hinge arm which is pivotally connected to the lid.

The one or more hinge arm retaining members and/or arm rest compartment retaining members may be formed by members having cooperating members or surfaces, such as protrusions, grooves, hooks, magnets, ball locks or the like.

According to an aspect, the present invention also relates to a kit comprising a vehicle seat and at least one arm rest according to any one of the accompanying claims, or as disclosed herein. In a preferred embodiment, the arm rest a tunnel arm rest adapted to be positioned between a first and a second vehicle seat.

### BRIEF DESCRIPTION OF THE DRAWINGS

Non-limiting embodiments of the present invention will be described with reference to the accompanying drawings in which;
figure 1a shows an arm rest with the lid in a closed position;
figure 1b shows the arm rest of figure 1a with the lid partly opened;
figure 1c shows the arm rest of figure 1 with the lid in the first opened position, providing a temporary shows unloading surface and;
Figure 2 shows the arm rest of figure 1a with the lid in the second opened position, providing full access to the arm rest compartment.

### DETAILED DESCRIPTION OF PREFERRED EMBODIMENTS

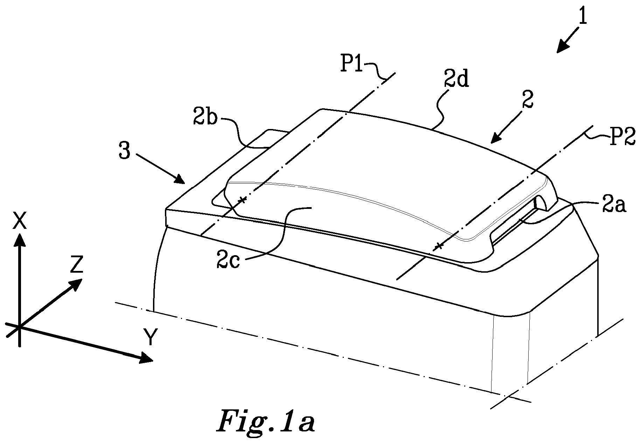

Figures 1a-1b show an arm rest 1 for a vehicle seat (not shown). The arm rest 1 comprises a lid 2 and an arm rest compartment 3. The lid comprises a first end 2a also referred to as the forward end, and a second end 2b also referred to as the rearward end. A first and a second longitudinal side 2c, 2d connects the first and the second end 2a, 2b.The arm rest compartment 3 can be used to store human necessities such as gloves, keys, pens, paper, sun glasses or the like. The arm rest 1 is advantageously positioned between two seats, such as a first and a second front seat of a vehicle, such arm rests are generally referred to as tunnel arm rests. The arm rest 1 may however be a side arm rest arranged between a vehicle door and the vehicle seat associated with the vehicle door. The lid 2 is openable so that the arm rest compartment 3 is accessible via an opening 4. The opening 4 has a first and a second end 4a, 4b. As will be described in greater detail below, the lid 2 is pivotable about a first and a second pivot axis P1, P2 to a first and a second opened position respectively. Figure 1a shows the lid 2 in a closed position.

For the purpose of orientation, a vertical axis X corresponds to the height of the arm rest 1, a horizontal transverse axis Z corresponds to the width of the arm rest 1 and a horizontal longitudinal axis Y corresponds to the length of the arm rest 1. A vehicle seat has a back rest and a seat cushion. The back rest is positioned at one end of the seat cushion. Herein, the back rest is positioned in the rearward end of the seat cushion, and a user sitting on the seat cushion generally has his or hers knees at the forward end of the seat cushion. Hence when referring to a forward or rearward end of an element herein, it is meant with respect to the vehicle seat associated with the arm rest as outlined above.

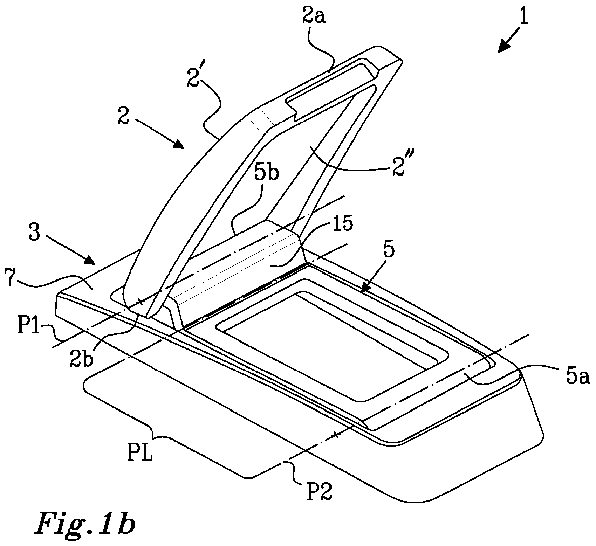

Figure 1b shows the arm rest 1 with the lid 2 in a half opened position, i.e. in a position half ways towards the first opened position. As is noticeable, the lid 2 has pivoted about the first pivot axis P1. The first end 2a of the lid 2 is substantially pointing upwards and the second end 2b of the lid 2 is substantially pointing downwards. The lid 2 has an arm rest side 2' and an opposite underside 2".

The lid 2 is connected to the arm rest compartment 3 via a hinge arm 5. The hinge arm 5 has a first and a second end 5a, 5b and longitudinal sides extending there between giving the lid 2 a substantially rectangular shape. The first end 5a of the hinge arm 5 is pivotally connected to the arm rest compartment 3, and more precisely to one end of the arm rest compartment 3. The second end 5b of the hinge arm 5 is pivotally attached to the second end 2b of the lid 2.

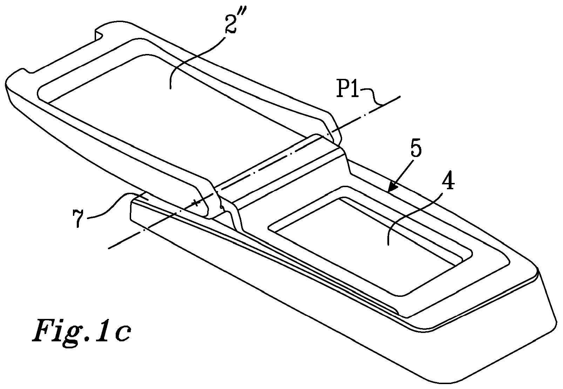

Figure 1c shows the lid 2 in the first opened position. As is noticeable, the underside 2" of the lid 2 is facing upwards forming a temporary unloading surface, when the lid 2 is in the first opened position. The temporary unloading surface 2" can function as an extended arm rest surface or as a temporary table for example. In figure 1c, the temporary unloading surface 2" is specifically configured to be a temporary table, enabling a user to put mugs, cans, or snacks thereon for example. By temporary is hereby meant that it is not a permanent position but is rather a configuration which can be made accessible when desired.

The hinge arm 5 can have different shapes. In the shown embodiment the hinge arm 5 is a straight hinge arm. It is advantageously rigid in terms of that it does not bend during normal use. In the shown embodiment the hinge arm 5 has the form of rectangular plate pivotally attached to the lid 2 and the arm rest compartment 3 at each corner of the rectangular plate. Of course one or more hinge arms can be used, e.g. two hinge arms, such as one at each longitudinal side of the lid 2. The hinge arm 5 is provided with an aperture 5a. The aperture 5' of the hinge arm 5 is intended to enable access for a user there through to the arm rest compartment when the lid 2 is in the first opened position. The aperture 5' has a substantially rectangular shape, following the contours of the hinge arm 5. The shape of the aperture 5' may be different however, such as oval or squared shaped. The important aspect of the aperture 5' is that it can permit access to the arm rest compartment 3 and thus defines a second opening, or a complementary or additional opening, to the arm rest compartment when the lid 2 is in the first opened position, or at least opened.

The arm rest side 2' of the lid 2 is resting on a portion of the arm rest compartment, or rather a portion of the arm rest compartment 3 defining the opening 4. The arm rest compartment 3 thus provides a lid support surface 7. The lid support surface 7 enables the lid 2 to gain support from the surrounding arm rest compartment 3 and thus become more rigid and reliable as an unloading surface.

The hinge arm can be said to have a main elongation along a first plane PL. The first plane PL is indicated in figure 1b. As can be seen, the first pivot axis P1 is offset with respect to the first plane P1. The lid 2 is arranged to the hinge arm 5 via a flange 15, in this case a substantially L-shaped flange. The hinge arm 5 thus comprises a flange 15 extending from the main elongation of the hinge arm. The first pivot axis P1 is arranged on the flange 15. The flange 15, and in this case the L-shaped flange, enables the lid 2 to be offset with respect to the main elongation of the hinge arm 5. It raises the lid 2 so that the lid 2 can rest on a portion of the arm rest compartment 3, as illustrated in figure 1c for example, in a favourable position. The first pivot axis P1 can be offset from the first plane PL at least 5 mm, preferably 10-60 mm.

The lid support surface 7 is in the shown embodiment vertically displaced from the first pivot axis P1. It is positioned vertically lower than the position of the first pivot axis P1. As the first pivot axis P1 is slightly higher up than the lid support surface, when the lid is in the first opened position, the temporary unloading surface 2" can be positioned substantially horizontal.

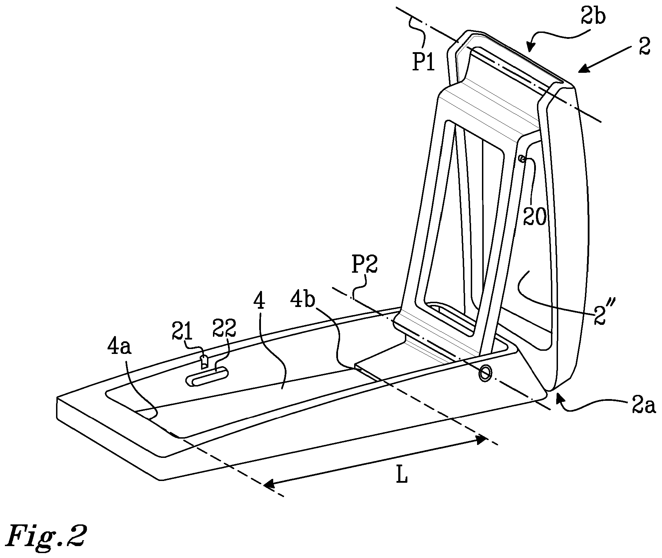

Figure 2 shows the arm rest 1 with the lid 2 opened on the second position. The hinge arm 5 may comprise one or more arm rest compartment retaining members 20 adapted to retain the hinge arm 5 at a desired position when the lid 2 is in the first opened position. The one or more arm rest compartment retaining members 20 assist in holding the unloading surface, e.g. if it is a table, in position as shown in figure 1c. The one or more arm rest compartment retaining members 20 is/are adapted to retain the hinge arm 5 to the arm rest compartment 3 when the lid is in the first opened position and/or when the lid is in the closed position. In the shown embodiment, the hinge arm 5 is substantially flush with the opening 4 when the lid 2 is in the first opened position, as illustrated in figure 1c. The one or more arm rest compartment retaining members 20 may be adapted to keep the hinge arm 5, independently of how the hinge arm 5 is shaped, flush with the opening 4 of the arm rest compartment 3 or at least in a predetermined position.

In figure 2, the one or more arm rest compartment retaining members 20 are formed by a protrusion protruding from the side of the hinge arm 5. The arm rest compartment 3 may also be provided with one or more hinge arm retaining members. In figure 2, the one or more hinge arm retaining members are formed by corresponding grooves 21 (of which only one is shown), which arranged at the proximity of the opening 4 of the arm rest compartment 3. A support ledge 22 is also arranged at each groove 21. Alternatively magnets or hooks can be used or other cooperating means. The one or more arm rest compartment retaining members and the one or more hinge arm retaining members may are cooperating in retaining the hinge arm 4 in a temporary position. The connection is rigid enough so that the temporary unloading surface 2" can be used but lenient enough so that the lid 2 can be opened to the second opened position.

As mentioned, figure 2 shows the arm rest 1 of figures 1a-1c with the lid 2 in the second opened position. As can be noticed, the lid 2 is positioned so that the forward end 2a is pointing downwards, i.e. towards the opening 4 of the arm rest compartment 3. Further, the rearward end 2b of the lid 2 is pointing upwards, i.e. away from the opening 4 of the arm rest compartment 3.

The arm rest 1 described above has the advantage of enabling a user to open the lid 2 to the arm rest compartment 3 by lifting the lid 2 in the rearward end 2b or in the forward end 2a. This enables for example a user which is sitting in a vehicle behind the vehicle seat to which the arm rest 1 is associated, to easily open the lid by lifting the rearward end 2b of the lid 2 in an upwardly direction. The lid 2 may further be temporarily transformed to an unloading surface, e.g. a table.

The opening 4 of the arm rest compartment 3 has substantially a rectangular form with a length and a width. The form of the opening may have other forms; it can be oval for example. Independently of the form of the opening, the opening has a length. The length L of the opening is indicated by the arrow in figure 2 and extends along the Y-axis. The opening 4 has a first and a second end 4a, 4b. As can be gleaned from figure 2, and is illustrated in figure 1b, the second end 2b of the lid 2 can be pivoted about the first pivot axis P1 so that the second end 2b of the lid 2 is between the first and the second end 2a-2b of the lid 2 when the lid 2 is pivoted to the first opened position.

## Claims

1. An arm rest (1) for a vehicle seat, said arm rest (1) comprising a pivotable lid (2) and an arm rest compartment (3) having an opening (4), said opening (4) having a first and a second end (4b, 4a), said lid (2) having a first end (2a) and a second end (2b), said lid (2) being attached to said arm rest compartment (3) via a hinge arm (5), said hinge arm (5) extending from said first end (4b) of said opening (4) to said second end (2b) of said lid (2), said lid (2) being displaceable to a first opened position by pivoting about a first pivot axis (P1) and to a second opened position by pivoting about a second pivot axis (P2),
said lid (2) having an arm rest side (2') and an opposite under side (2"), **characterized in that**
when said lid (2) is in said first opened position said under side (2") of said lid (2) is facing upwards providing a temporary unloading surface, and said arm rest compartment (3) has a lid support surface (7) in the proximity of said opening (4), so that when said lid (2) is in said first opened position, said arm rest side (2') is resting on said lid support surface (7) of said arm rest compartment (3).

2. The arm rest according to claim 1, wherein said hinge arm (5) comprises an aperture (5'), wherein said aperture is superimposed said opening so as to permit access to said arm rest compartment (3), when said lid (2) is in said first opened position.

3. The arm rest according to claim 2, wherein said aperture (5) is substantially superimposed, or at least in the proximity of, said under side (2") of said lid (2) when said lid (2) is in said second opened position.

4. The arm rest according to any one of the preceding claims, wherein said hinge arm (5) has a main elongation along a first plane (PL), and in that said first pivot axis (P1) is offset with respect to said first plane (PL).

5. The arm rest according to claim 4, wherein said hinge arm (5) comprises a flange (15) extending from said main elongation of said hinge arm (5), said first pivot axis (P1) being arranged on said flange (15).

6. The arm rest according to claim 5, wherein said flange (15) is substantially L-shaped so that said first pivot axis (P1) has an elevated position with respect to said first plane (PL), when said lid (2) is in said first opened position.

7. The arm rest according to any one of the preceding claims, wherein said temporary unloading surface (2") is a temporary table or a temporary arm rest surface.

8. The arm rest according to any one of the preceding claims, wherein said arm rest (1) comprises a lid retaining arrangement, said lid retaining arrangement is adapted to retain the lid (2) in a steady position when the lid (2) is in the first opened position and/or when the lid (2) is in the closed position.

9. The arm rest according to claim 8, wherein said lid retaining arrangement is formed by mechanical retaining arrangement and/or magnetic retaining arrangement.

10. The arm rest according to claim 9, wherein said lid retaining arrangement is at least partly formed by one or more hinge arm retaining members (21) and/or arm rest compartment retaining members (20).

11. The arm rest according to claim 10, wherein said one or more hinge arm retaining members (21) and/or arm rest compartment retaining members (20) are formed by members having cooperating members or surfaces, such as protrusions, grooves, hooks, magnets, ball locks or the like.

## Patentansprüche

1. Armlehne (1) für einen Fahrzeugsitz, wobei die Armlehne (1) einen schwenkbaren Deckel (2) und ein Armlehnenfach (3) mit einer Öffnung (4) umfasst, wobei die Öffnung (4) ein erstes und ein zweites Ende (4b, 4a) hat, wobei der Deckel (2) ein erstes Ende (2a) und ein zweites Ende (2b) hat, wobei der Deckel (2) über einen Scharnierarm (5) an dem Armlehnenfach (3) angebracht ist, wobei sich der Scharnierarm (5) von dem ersten Ende (4b) der Öffnung (4) zu dem zweiten Ende (2b) des Deckels (2) erstreckt, wobei der Deckel (2) durch Schwenken um eine erste Schwenkachse (P1) in eine erste geöffnete Position und durch Schwenken um eine zweite Schwenkachse (P2) in eine zweite geöffnete Position verschiebbar ist, wobei der Deckel (2) eine Armlehnenseite (2') und eine gegenüberliegende Unterseite (2") hat, **dadurch gekennzeichnet, dass**
die Unterseite (2") des Deckels (2), wenn der Deckel (2) in der ersten geöffneten Position ist, nach oben weist und eine provisorische Abladefläche bereitstellt, und das Armlehnenfach (3) eine Deckelstützfläche (7) in der Nähe der Öffnung (4) hat, so dass die Armlehnenseite (2') auf der Deckelstützfläche (7) des Armlehnenfachs (3) ruht, wenn der Deckel (2) in der ersten geöffneten Position ist.

2. Armlehne nach Anspruch 1, wobei der Scharnierarm (5) einen Durchlass (5') umfasst, wobei der Durchlass über der Öffnung liegt, um Zugriff auf das Armlehnenfach (3) zu gestatten, wenn der Deckel (2) in der ersten geöffneten Position ist.

3. Armlehne nach Anspruch 2, wobei der Durchlass (5) im Wesentlichen über der Unterseite (2") des Deckels (2) oder mindestens in deren Nähe liegt, wenn der Deckel (2) in der zweiten geöffneten Position ist.

4. Armlehne nach einem der vorhergehenden Ansprüche, wobei der Scharnierarm (5) eine Haupterstreckung entlang einer ersten Ebene (PL) hat und dass die erste Schwenkachse (P1) bezüglich der ersten Ebene (PL) versetzt ist.

5. Armlehne nach Anspruch 4, wobei der Scharnierarm (5) einen Flansch (15) umfasst, der sich von der Haupterstreckung des Scharnierarms (5) erstreckt, wobei die erste Schwenkachse (P1) an dem Flansch (15) angeordnet ist.

6. Armlehne nach Anspruch 5, wobei der Flansch (15) im Wesentlichen L-förmig ist, so dass die erste Schwenkachse (P1) bezüglich der ersten Ebene (PL) eine erhöhte Position hat, wenn der Deckel (2) in der ersten geöffneten Position ist.

7. Armlehne nach einem der vorhergehenden Ansprüche, wobei die provisorische Abladefläche (2") ein provisorischer Tisch oder eine provisorische Armlehnenfläche ist.

8. Armlehne nach einem der vorhergehenden Ansprüche, wobei die Armlehne (1) eine Deckelhalteanordnung umfasst, wobei die Deckelhalteanordnung dazu ausgeführt ist, den Deckel (2) in einer stabilen Position zu halten, wenn der Deckel (2) in der ersten geöffneten Position ist und/oder wenn der Deckel (2) in der geschlossenen Position ist.

9. Armlehne nach Anspruch 8, wobei die Deckelhalteanordnung durch eine mechanische Halteanordnung und/oder eine magnetische Halteanordnung gebildet ist.

10. Armlehne nach Anspruch 9, wobei die Deckelhalteanordnung mindestens teilweise durch ein oder mehrere Scharnierarmhalteglieder (21) und/oder Armlehnenfachhalteglieder (20) gebildet ist.

11. Armlehne nach Anspruch 10, wobei das eine oder die mehreren Scharnierarmhalteglieder (21) und/oder Armlehnenfachhalteglieder (20) durch Glieder mit zusammenwirkenden Gliedern oder Flächen wie Vorsprüngen, Nuten, Haken, Magneten, Kugelsperren o. ä. gebildet sind.

## Revendications

1. Accoudoir (1) pour un siège de véhicule, ledit accoudoir (1) comprenant un couvercle pivotant (2) et un compartiment d'accoudoir (3) comportant une ouverture (4), ladite ouverture (4) comportant des première et seconde extrémités (4b, 4a), ledit couvercle (2) comportant une première extrémité (2a) et une seconde extrémité (2b), ledit couvercle (2) étant attaché audit compartiment d'accoudoir (3) par le biais d'un bras d'articulation (5), ledit bras d'articulation (5) s'étendant de ladite première extrémité (4b) de ladite ouverture (4) à ladite seconde extrémité (2b) dudit couvercle (2), ledit couvercle (2) étant déplaçable jusqu'à une première position ouverte par pivotement autour d'un premier axe de pivotement (P1) et jusqu'à une seconde position ouverte par pivotement autour d'un second axe de pivotement (P2),
ledit couvercle (2) comportant un côté accoudoir (2') et un côté inférieur (2") opposé,
**caractérisé en ce que**
lorsque ledit couvercle (2) se trouve dans ladite première position ouverte, ledit côté inférieur (2") dudit couvercle (2) est orienté vers le haut et forme une surface de dépôt temporaire, et ledit compartiment d'accoudoir (3) comporte une surface de support de couvercle (7) à proximité de ladite ouverture (4) de telle sorte que, lorsque ledit couvercle (2) se trouve dans ladite première position ouverte, ledit côté accoudoir (2') repose sur ladite surface de support de couvercle (7) dudit compartiment d'accoudoir (3).

2. Accoudoir selon la revendication 1, dans lequel ledit bras d'articulation (5) comprend un orifice (5'), dans lequel ledit orifice est superposé avec ladite ouverture de façon à permettre d'accéder audit compartiment d'accoudoir (3) lorsque ledit couvercle (2) se trouve dans ladite première position ouverte.

3. Accoudoir selon la revendication 2, dans lequel ledit orifice (5) est essentiellement superposé avec ledit côté inférieur (2") dudit couvercle (2), ou au moins à proximité de celui-ci, lorsque ledit couvercle (2) se trouve dans ladite seconde position ouverte.

4. Accoudoir selon l'une quelconque des revendications précédentes, dans lequel ledit bras d'articulation (5) présente une étendue principale le long d'un premier plan (PL), et ledit premier axe de pivotement (P1) est décalé par rapport audit premier plan (PL).

5. Accoudoir selon la revendication 4, dans lequel ledit bras d'articulation (5) comprend une ailette (15) s'étendant à partir de ladite étendue principale dudit bras d'articulation (5), ledit premier axe de pivotement (P1) étant situé sur ladite ailette (15).

6. Accoudoir selon la revendication 5, dans lequel ladite ailette (15) est essentiellement en forme de L de sorte que ledit premier axe de pivotement (P1) a une position surélevée par rapport audit premier plan (PL) lorsque ledit couvercle (2) se trouve dans ladite première position ouverte.

7. Accoudoir selon l'une quelconque des revendications précédentes, dans lequel ladite surface de dépôt temporaire (2") est une tablette temporaire ou une surface formant accoudoir temporaire.

8. Accoudoir selon l'une quelconque des revendications précédentes, ledit accoudoir (1) comprenant un système de retenue de couvercle, ledit système de retenue de couvercle étant conçu pour retenir le couvercle (2) dans une position stable lorsque le couvercle (2) se trouve dans la première position ouverte et/ou lorsque le couvercle (2) se trouve dans la position fermée.

9. Accoudoir selon la revendication 8, dans lequel ledit système de retenue de couvercle est formé par un système de retenue mécanique et/ou un système de retenue magnétique.

10. Accoudoir selon la revendication 9, dans lequel ledit système de retenue de couvercle est au moins partiellement formé par un ou plusieurs éléments de retenue de bras d'articulation (21) et/ou éléments de retenue de compartiment d'accoudoir (20).

11. Accoudoir selon la revendication 10, dans lequel un ou plusieurs éléments de retenue de bras d'articulation (21) et/ou éléments de retenue de compartiment d'accoudoir (20) sont formés par des éléments comportant des éléments ou surfaces coopérants, tels que des protubérances, des rainures, des crochets, des aimants, des verrous à billes ou similaires.
